# EUROPÄISCHE PATENTSCHRIFT

(11) **EP 1 245 862 B1**
(45) Veröffentlichungstag und Bekanntmachung des Hinweises auf die Patenterteilung: **26.07.2006**
(21) Anmeldenummer: 02006307.9
(22) Anmeldetag: 21.03.2002
(51) Int. Cl.: F16G 13/06, B21L 9/06

(54) **Antriebskette für ein Fahrrad oder dergleichen**
Driving chain for a bicycle or similar
Chaîne de transmission pour une bicyclette ou analogue

(30) Priorität: 29.03.2001 DE 10115628; 05.12.2001 DE 10159773
(43) Veröffentlichungstag der Anmeldung: 02.10.2002
(73) Patentinhaber: SRAM Deutschland GmbH, 97404 Schweinfurt (DE)
(72) Erfinder: Reiter, Markus, 97421 Schweinfurt (DE); Santos, Pedro, Alto dos Barronhos, 2795 Carnaxide (PT)

(56) Entgegenhaltungen:
- DE-U- 9 101 113
- FR-A- 974 976
- FR-A- 2 652 627
- FR-A- 2 753 512
- GB-A- 838 115
- GB-A- 2 257 221
- GB-A- 191 216 604
- US-A- 4 978 327
- US-A- 5 362 282

## Beschreibung

Die Erfindung betrifft ein Fertigungsverfahren für eine Rollenkette.für ein Fahrrad, gemäß dem Oberbegriff des Anspruchs 1, siehe FR-A-974976.

Das französische Patent mit der Publ. Nr. 2 753 512 offenbart eine Kette für Fahrräder, die aus Kettengliedern mit Außenlaschen und solchen mit Innenlaschen besteht, welche jeweils Bohrungen aufweisen und nach dem Zusammenfügen der Kettenglieder miteinander durch Bolzen verbunden werden. In Verbindung mit Rollen ergibt sich somit eine an sich bekannte Rollenkette, die mit einer Vielzahl von miteinander verbundenen Kettengliedern ein Antriebselement zwischen zwei Zahnrädern zum Antrieb des Fahrrades bildet. Die Aufgabe der Erfindung für die dort vorgeschlagene Kette war es, ein besonders leichtes und doch in seiner Belastbarkeit dem Stand der Technik adäquates Antriebselement zu schaffen, was durch Gewichtserleichterung an zwei Stellen erreicht wird: Zum Einen wird die Außenlasche mit einem Durchbruch versehen, der in der Mitte der Außenlasche angeordnet ist und in etwa die verkleinerte Form der Außenkontur der Außenlasche darstellt. Zum Andern wird der Bolzen innen hohl ausgeführt, wodurch ebenfalls Gewicht eingespart wird. Der Bolzen wird somit als Rohrmaterial bereitgestellt und nach seinem Einpressen in die Bohrungen der Au-ßenlaschen und Innenlaschen zur Erhöhung seines Presssitzes in der Außenlasche vernietet, wodurch sich am äußeren Rand der Bohrung der Außenlasche eine geringfügige Aufweitung der Bohrung ergibt. Eine solche Aufweitung findet allerdings immer statt, einerlei, ob ein Bolzen aus Vollmaterial oder ein solcher aus Rohrmaterial zum Einsatz kommt, wenn er denn nur vernietet wird.

Ferner ist mit dem US Patent Nr. 5,362,282 unter dem Titel "MASTER CHAIN LINK" ein Verschlussglied für eine Rollenkette für ein Fahrrad bekannt geworden, welches zweiteilig ausgeführt ist, wobei jedes der Teile aus einer äußeren Speziallasche und einem Spezialbolzen besteht, die miteinander verpresst sind. Sollen nun zum Verschließen der Rollenkette zwei innere Kettenglieder miteinander verbunden werden, so wird das Erste der L-förmigen Teile mit dem Spezialbolzen in das erste innere Kettenglied und das zweite L-förmige Teil mit dem Spezialbolzen von gegenüber in das zweite innere Kettenglied gesteckt und gleichzeitig durch Öffnungen der jeweils gegenüberliegenden Speziallasche geschoben. Die Bolzen weisen an ihrem freien Ende einen Kopf auf, der durch eine Hinterdrehung entsteht, die als Führung und Halterung in einem Schloss der Öffnung der Speziallasche dient. Der Vorteil dieses Verschlussgliedes liegt in einer gewünschten geringen Beweglichkeit quer zur Schwenkrichtung der Rollenkette bei Querkräften und in der Kombinierbarkeit mit der Rollenkette nach dem vorliegenden Erfindungsvorschlag, bei der es unmöglich ist, eine Kettenkürzung durch Auspressen eines Bolzens durch zu führen.
In FR 974.976 ist eine Rollenkette gezeigt, die über rohrförmige Bolzen verfügt. Diese Bolzen können aus einem flachen Rohling gerollt werden. Bei der Montage der Rohrbolzen in den Außenlaschen werden die Enden der Rohrbolzen konisch umgeformt, um im Betrieb der Kette ein Lösen der Bolzen von den Außenlaschen zu verhindern. Die Rohrbolzen weisen nach der Montage in den Außenlaschen an den Enden einen konisch aufgeweiteten Rohrabschnitt auf, mit einem zum Ende zu sich vergrößernden Innendurchmesser.

Es hat sich in der Praxis gezeigt, dass Rollenketten, die an Fahrrädern mit Kettenschaltungen Verwendung finden, bei ihrer Kraftübertragung von einem Zahnrad auf ein nicht zu diesem fluchtendes zweites Zahnrad Querkräften standhalten muss, die in der Lage sind, die Verbindung der Laschen durch die Bolzen auf zu sprengen, wodurch das vernietete Ende des Bolzens durch die Bohrung der Außenlasche hindurch gezogen wird. Die Vernietung des Bolzens in der Außenlasche alleine ist also kein hinreichender Schutz vor einer Zerstörung der Rollenkette bei hohen Belastungen im Fahrbetrieb.

Die vorliegende Erfindung verbessert sowohl den Stand der Technik wie auch die Rollenkette gemäß dem vorgenannten französischen Patent insofern, als die Verbindung des Endes des Bolzens mit der Außenlasche in Richtung zu einem verbesserten Formschluss verändert wird, sodass vermieden wird, dass das Ende des Bolzens durch die Bohrung der Außenlasche hindurch gezogen wird. Dies wird durch eine Bohrung in der Außenlasche erreicht, die vor der Montage nicht zylindrisch ausgebildet ist, sondern vielmehr eine trichterförmige nach außen gerichtete Aufweitung aufweist. Diese trichterförmige Bohrung geht mit dem Bolzen an ihrer nach innen gerichteten engeren Stelle zwar immer noch einen Presssitz ein, weist aber durch die zurückweichende Kontur der Bohrung nach außen ein größer werdendes Spiel gegenüber dem Bolzen auf. Der Bolzen wird nun vernietet und das Ende des Bolzens füllt den vom Spiel vorgegebenen Freiraum aus.

Wird als Material für den Bolzen Rohrmaterial vorgesehen, so ergibt sich neben dem Vorteil des erleichterten Gewichts auch ein kostengünstigeres Verfahren der Vernietung. Es wird nämlich ein Werkzeug verwendet, das zwei Stempel aufweist, die sich dem Bolzen axial von beiden Seiten nähern und die Enden des Bolzens vom Innendurchmesser her aufweiten. Ein solcher Stempel weist einen Einführungsdurchmesser, einen Aufweitungskegel und zur Bestimmung der Länge des Bolzens eine Kalibrierungsfläche auf. Der Aufweitungskegel ist der Kontur der Bohrung experimentell angepasst, sodass es möglich ist, den Presssitz des Endes des Bolzens entlang der trichterförmigen Bohrung unterschiedlich stark zu gestalten. Es ist sogar möglich, diesen nach außen hin gegen 0 gehen zu lassen, oder sogar ein definiertes Spiel im äußeren Bereich zu realisieren, welches dann erforderlich ist, wenn das von den Außenlaschen und den Bolzen gebildete Rechteck bei Auftreten von Querkräften diesen nachgeben und ein Parallelogramm bilden soll.

Herkömmliche Rollenketten reagieren auf Querkräfte dadurch, dass die inneren Kettenglieder auf ihren Bolzen ausweichen und dadurch eine verschleißfördernde Kantenlast erzeugen, die ein erstes Mal beim Verlassen des ersten Zahnrades eines nicht zueinander fluchtenden Zahnradpaares und ein zweites Mal beim Auflaufen auf das zweite Zahnrad auf der anderen Seite des Bolzens stattfindet. Bildet sich bei Querkräften jedoch das vorbeschriebene Parallelogramm sowohl am ersten wie auch in umgekehrter Richtung am zweiten Zahnrad aus, so wird diese Kantenlast verhindert und der Verschleiß verringert. Es ist sinnfällig, dass die Verarbeitung eines Bolzens aus Rohrmaterial der eines solchen aus Vollmaterial vorzuziehen ist, da Taumelnieten als Herstellungsverfahren für Rollenketten aus Zeitgründen nicht in Frage kommt.

Schließlich bedarf es der Erwähnung, dass es beim Stand der Technik oftmals nicht mehr möglich ist, einen Bolzen der Rollenkette zum Zwecke ihrer Öffnung und/oder Demontage aus zu pressen, da dies die stark verdickten Enden der Bolzen nicht zulassen. Soll die Rollenkette also geöffnet werden, so müssen mindestens zwei Enden von zwei Bolzen abgeschliffen werden, um die zwei zur Verbindung notwendigen inneren Kettenglieder frei zu legen.

Die Erfindung hat es sich somit zur Aufgabe gemacht, eine Rollenkette zu schaffen, die gegenüber dem Stand der Technik eine erhöhte Sicherheit gegen Aufsprengen der Verbindung von Außenlaschen und Bolzen bei erhöhter Belastung durch Querkräfte bietet. Zusätzlich zu der vorgenannte Aufgabe soll die Antriebskette schmal gestaltet sein und eine maximale Anzahl an Kettenrädern in einem Zahnradsatz auf der Hinterradachse des Fahrrades ermöglichen.

Zur Lösung dieser Aufgabe sind in der kennzeichnenden Teil des Anspruchs 1 Merkmale vorgesehen, die durch solche aus den Unteransprüchen vorteilhaft weitergebildet werden können.

Es ist neben den vorgenannten Argumenten für die Gestaltung der Rollenkette speziell für deren Verwendung auf einem Zahnradsatz an der Hinterradachse des Fahrrades wichtig, dass die Rollenkette durch ihre Gestaltung einen möglichst geringen Abstand zwischen den Zahnrädern dieses Zahnradsatzes ermöglicht, um auf dem begrenzten Raum der Hinterradachse neben einem der Speichenflansche eine maximale Anzahl an Kettenrädern unter zu bringen. Die wichtigste Bedingung hierfür ist es, dass über die Außenkontur der Rollenkette, die durch die Außenfläche der Außenlasche im wesentlichen bestimmt wird, keine Bauteile hinausreichen. Hier ist in erster Linie der Bolzen zu nennen, der gemäß dem Stand der Technik eine Kante außerhalb dieser Außenkontur aufweist, die zudem Unregelmäßigkeiten durch die Vernietung des Bolzens aufweisen kann. Kanten dieser Art verfangen sich schnell an einer Verzahnung eines benachbarten Zahnrades, speziell eines größeren, und bewirken ungewollte Schaltvorgänge oder zumindest Geräusche. Stehen aber die Enden des Bolzens über die Kontur der Rollenkette hinaus, so muss sicher gestellt werden, dass diese Enden wenigstens keine Kanten aufweisen, die an dem benachbarten Kettenrad hängen bleiben können. Ein solcher Fall ist gegeben, wenn das Ende des Bolzens beim Vernieten ballig ausgebildet wird, so dass die Kante mit der Außenkontur der Rollenkette und so mit der Außenläsche zusammen fällt. Bei einer Berührung des derart ausgebildeten Endes des Bolzens mit dem benachbarten Kettenrad wird die Antriebskette dort abgewiesen und in ihrer Funktion nicht beeinträchtigt. Dies gilt für Bolzen aus Rundmaterial gleichermaßen wie für Bolzen aus Rohrmaterial, wobei letztere eine teilweise ballige Kontur oder einfach eine Schräge aufweisen.

Zur Realisierung eines die Außenkontur der Rollenskette nicht beeinträchtigenden Endes des Bolzens wird vorgeschlagen, die Bohrung der Außenlasche mit einem zylindrischen Abschnitt und mit einem außenkontumahen kegeligen Abschnitt zu versehen, wobei der kegelige Abschnitt auf einer Erstreckung angeordnet ist, die etwa ein Drittel einer Dicke der Außenlasche ausmacht. Auf diese Weise kann die Kante des ursprünglich längeren Bolzens in die Außenkontur der Rollenkette verlegt werden.

Es hat sich gezeigt, dass das Ende eines Bolzens aus Rohrmaterial sich am besten mit dem vorgenannten kegeligen Abschnitt vernieten lässt, wenn die Stempel des Werkzeuges mit ihren Aufweitungskegeln dort einen Konuswinkel von 55° bis 65° erzeugen.

Zur Erfüllung der vorgenannten Funktion kann auch ein Rohrbolzen zum Einsatz kommen, der in seinem mittleren Bereich einen Abschnitt mit Voliquerschnitt aufweist, wobei die Länge des Hohlquerschnittes an seinen beiden rohrförmigen Enden mindestens der Länge des kegeligen Abschnittes in der Bohrung der Außenlasche entspricht, um eine zuverlässige Prägung nach dem vorbeschriebenen Verfahren zu erreichen. Die Umformung des Endes des Bolzens aus Rohrmaterial zur Herstellung eines zuverlässigen Kontaktes mit dem kegeligen Abschnitt der Bohrung in der Außenlasche könnte auch durch ein Verfahren erreicht werden , das aus einer Synthese des Prägeverfahrens und des Taumelnietverfahrens besteht. Hier kommen Stempel zum Einsatz, die einen Aufweitungskegel mit einem geringeren Winkel aufweisen, die aber nach dem Anprägen des Bolzens dann in eine Taumelbewegung versetzt werden, um den erforderlichen Konuswinkel von 55° bis 65° im Ende des Bolzens her zu stellen.

Als Alternative hierzu bietet es sich an, nach den vorbeschriebenen Verfahren das Ende des Bolzens durch den Einsatz von unrunden Stempeln ungleichmäßig aufzuweiten, wodurch ebenfalls zwei gegenüberliegende Kontaktprägungen zwischen dem Ende des Bolzens und der Außenlasche erzeugt werden können.

Analog zu der oben beschriebenen Erzeugung von zwei Kontaktprägungen lassen sich auch drei oder vier symmetrisch zu einander angeordnete Kontaktprägungen mit Flächenpressung herstellen, die aber von der Funktion her zu der Prägung des gesamten Endes des Bolzens keinen nennenswerten Unterschied darstellen. Allen oben erwähnten Verfahren entspricht das Bestreben, dass es keine außerhalb der Kontur der Rollenkette liegenden Kanten geben soll.

Zu dem Thema der schmalen Bauweise der Rollenkette gehört auch die Überlegung, die Laschen so schmal zu machen, wie es nur möglich ist. Da die Versuche und die Berechnungen ergeben haben, dass die Laschen an den Wangen schwächer sein können als im Bereich der Bohrungen, wird vorgeschlagen, die Außenlasche an ihrem schlanken Mittelteil mit einer reduzierten Dicke zu versehen, wobei sie auf ihrer zur Innenlasche weisenden Seite zurück genommen ist. Da ein Schaltvorgang fast immer durch Einfangen von Zähnen des benachbarten Zahnrades durch die Außenlasche erfolgt, funktioniert dieser um so besser, je weiter außen die Innenseite der Außenlasche an der Kontaktstelle ist. Es ist also optimal, die Außenlasche über die gesamte Breite ihres schlanken Mittelteils mit der reduzierten Dicke zu versehen.

Die Montage der Rollenkette in Großserie kann erleichtert werden, wenn die Enden eines modifizierten Bolzens je einen Anschlag aufweisen, der von der Stirnfläche des Bolzens einen Abstand von etwa der Dicke der Außenlasche aufweist, wobei der Bereich des Bolzens in der Außenlasche sowie deren Bohrung einen reduzierten Durchmesser gegenüber dem normalen Durchmesser des Bolzens und der Bohrung der Innenlasche aufweist.

Schließlich wird die Verwendung eines Verschlussgliedes gemäß den Vorschlägen des französischen Patentes Nr. 2 652 627 (Reg. Nat. 89 12752) mit dem Titel "ACCESSOIRE DE JONCTION POUR CHAI-NE DE TRANSMISSION" vorgeschlagen, wodurch die Rollenkette zu einer betriebsfähigen Einheit werden kann, wenn man ein erstes Element und ein zweites Element ineinander verpresst, wobei die beiden Elemente den Raum eines Bolzens einnehmen und in eingepresstem Zustand ein äußeres Kettenglied mit einem inneren Kettenglied verbinden. In Abwandlung derVorschläge aus 2 652 627 weist die Außenlasche an ihrer Au-ßenkontur um die Bohrung an der Stelle des Verbindungsgliedes je eine Ansenkung auf, in die sich ein Flachkopf fügt, der an beide Elemente angeformt ist. Auf diese Weise ergeben sich keine schädlichen Kanten, die die Schaltqualität der Rollenkette beeinträchtigen könnten.

Die Vorteile der Erfindung ergeben sich aus der nachfolgenden Beschreibung von Ausführungsbeispielen in Verbindung mit den Ansprüchen und den Zeichnungen,

Es zeigen:
- Fig.1: eine Rollenkette, bestehend aus äußeren und inneren Kettengliedern, die wiederum Außenlaschen und Innenlaschen sowie Bolzen und Rollen umfassen, in Teilschnittdarstellung gemäß dem Stand der Technik;
- Fig.2: die Rollenkette gemäß Fig. 1 in einer Ansicht um 90 Grad gedreht;
- Fig.3: einen Schnitt der Rollenkette quer zur Längsrichtung zur Kenntlichmachung speziell der Lage des Bolzens zur Außenlasche;
- Fig.4: eine schematische Darstellung eines Verschlussgliedes zwischen den Enden der Rollenkette, insbesondere zwischen zwei Inneren Kettengliedern;
- Fig.5: ein Werkzeug zur Aufweitung der Enden des Bolzens und somit zur Auffüllung des durch eine trichterförmige Aufweitung der Bohrung in der Außenlasche entstandenen Spiels;
- Fig.6: die Anordnung der Rollenkette auf zwei nicht zueinander fluchtenden Zahnrädern;
- Fig.7: die Außenlasche im Schnitt durch die Bohrung, die einen zylindrischen und einen kegeligen Abschnitt aufweist;
- Fig.8: den Bolzen aus Rohrmaterial mit einem angeprägten Konuswinkel zur Befestigung im kegeligen Abschnitt der Bohrung;
- Fig. 9: Eine Außenlasche mit einer im schmalen Mittelteil angeordneten und zur Innenlasche weisenden reduzierten Dicke
- Fig.10: ein Verschlussglied, bestehend aus zwei Elementen, die miteinander verpressbar sind und je einen Flachkopf aufweisen;
- Fig. 11: einen Bolzen mit einem Anschlag und einem reduzierten Durchmesser zur Aufnahme der Außenlasche.

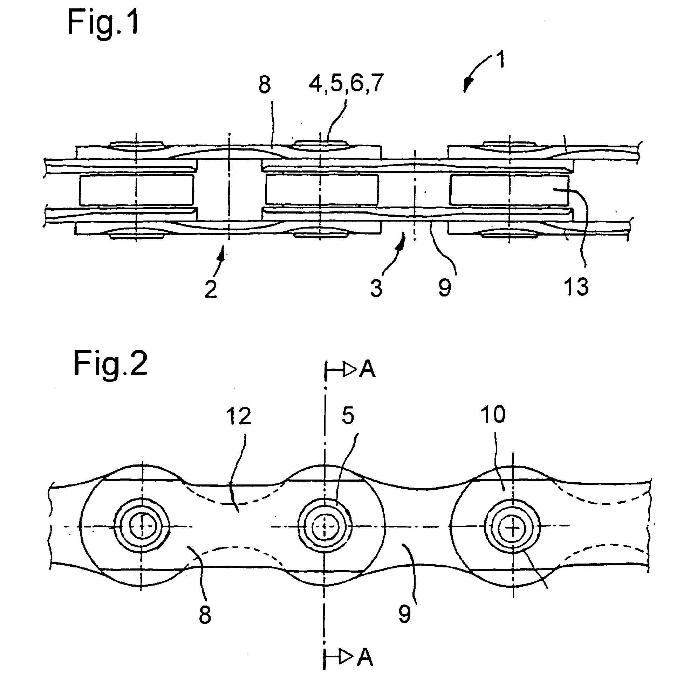

Wird mit 1 eine Rollenkette zum Antrieb eines Fahrrades bezeichnet, so besteht diese im Allgemeinen aus äußeren Kettengliedern 2 und inneren Kettengliedern 3, die durch Bolzen 4,5 schwenkbar verbunden sind. Um die Bolzen 4,5 können Rollen 13 angeordnet sein, die mit Verzahnungen von Zahnrädern 21,22 zusammenwirken. Gemäß Fig. 1 weisen die äußeren Kettenglieder 2 Außenlaschen 8 und die inneren Kettenglieder 3 Innenlaschen 9 auf, die an ihren kreisrunden Enden 10 jeweils mit Bohrungen 11 versehen sind, durch die die Bolzen 4,5 ragen und gemäß dem Stand der Technik bei der Montage der Rollenkette 1 außen an ihren Enden 6 bzw. 7 vernietet werden. Während der Bolzen 4 aus Rundmaterial besteht, wird für den Bolzen 5 Rohrmaterial vorgeschlagen, das in der Rollenkette 1 gemäß Fig. 2 vorgesehen ist. Dort ist auch ersichtlich, dass sich bei den Außenlaschen 8 und bei den Innenlaschen 9 zwischen den beiden kreisrunden Enden10 jeweils ein schlankes Mittelteil 12 erstreckt, welches die axiale Lage der Rollenkette 1 auf den Zähnen der Zahnräder 21, 22 bestimmt.

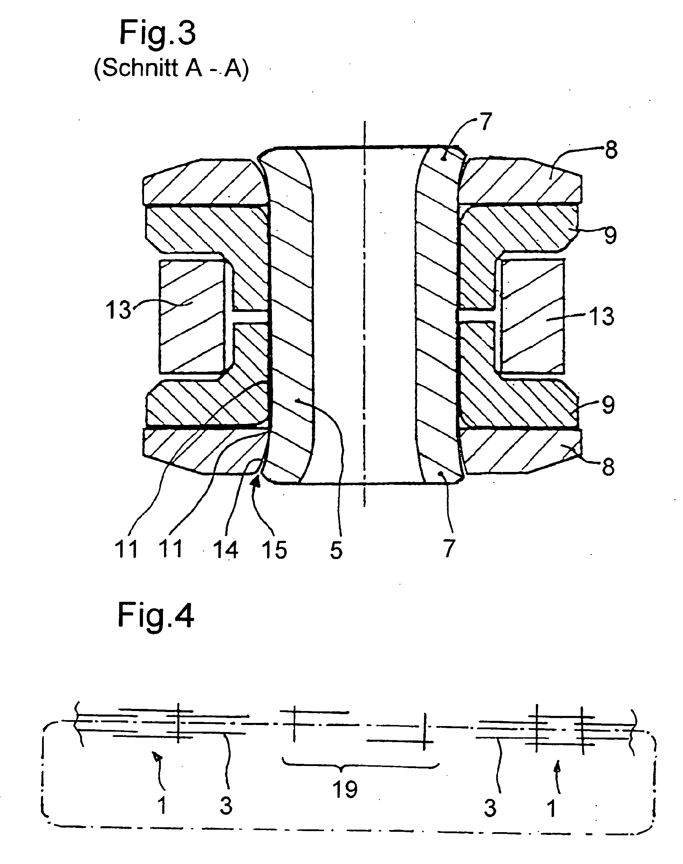

Fig. 3 veranschaulicht einen Schnitt durch die Rollenkette 1 quer zu ihrer Längsrichtung, wo der Bolzen 5 aus Rohrmaterial im Zusammenbau mit insbesondere den Außenlaschen 8 dargestellt ist. Ferner umgeben den Bolzen 5 die Innenlaschen 9 mit einer in diesem Falle großen Lagerfläche durch eine Abwinkelung im Bereich ihrer Bohrungen 11 sowie die Rollen 13, die auf den Abwinkelungen gelagert sind. Die Außenlaschen 8 weisen an ihrer Bohrung 11 eine Kontur 14 auf, die sich nach außen trichterförmig öffnet und zu den Enden 7 der Bolzen 5 ein nach außen größer werdendes Spiel 15 bildet.
Die Enden 7 ihrerseits sind vom Innendurchmesser des Bolzens 5 bereits aufgeweitet, jedoch gerade nur soweit, dass sich das vorgenannte Spiel 15 im Mü - Bereich entwickeln kann, um eine geringe Beweglichkeit dieser Pressverbindung zu erhalten.

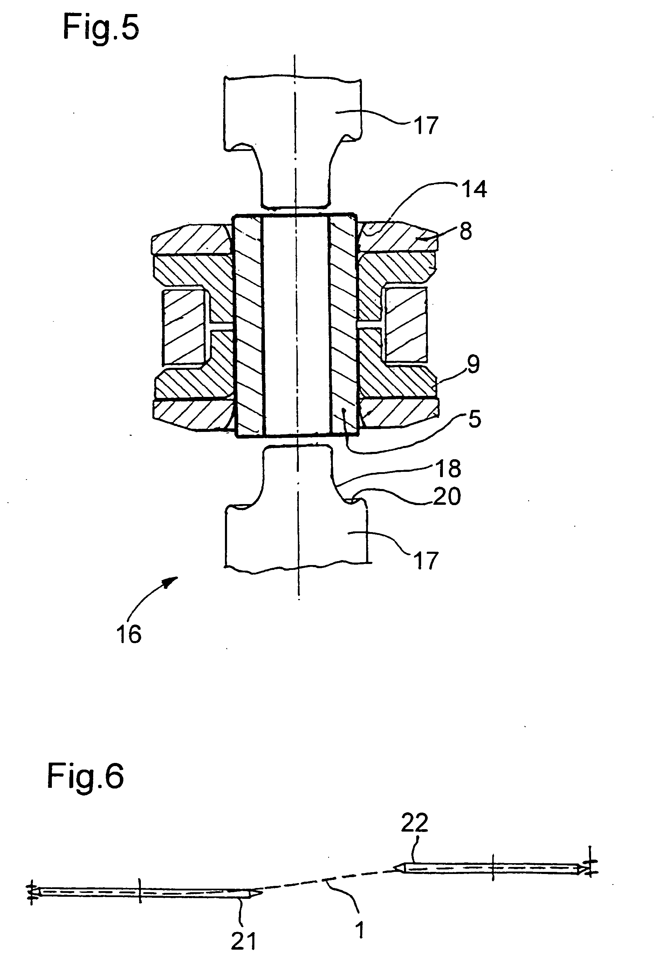

Gemäß Fig. 5 wird ein Prägewerkzeug 16 vorgeschlagen, das in eine Kettennietmaschine einzubauen ist und im wesentlichen aus zwei Stempeln 17 besteht, die mit einem Einführungsdurchmesser in die hohlen Enden 7 des Bolzens 5 aus Rohrmaterial eingeführt werden, dann beim Zusammenfahren der Stempel 17 die Enden 7 durch die an den Einführungsdurchmesser anschließenden Aufweitungskegel 18 aufweiten und zum Abschluss des Prägevorgangs die Enden 7 mittels einer Kalibrierungsfläche 20 in ihrer Länge sowie in der Form ihrer Stirnflächen kalibrieren.

Gemäß Fig. 4 ist die Rollenkette 1 dargestellt, die durch ein Verschlussglied 19 verschlossen werden soll, wobei sich zu diesem Zweck zwei Innere Kettenglieder 3 gegenüber liegen. Das zweiteilige Verschlussglied 19 wird mit seinem ersten Teil, bestehend aus einem Spezialbolzen und einer Speziallasche, mit dem ersten inneren Kettenglied 3 verbunden, ebenso das zweite Teil, das mit dem ersten identisch ist, mit dem zweiten inneren Kettenglied 3. Danach lassen sich durch Hinterschneidungen angeformte Köpfe der vorbeschriebenen Spezialbolzen in Öffnungen der Speziallaschen fügen, wobei die Öffnungen angeprägte Schlösser aufweisen, in welchen die Köpfe der Spezialbolzen lösbar verankert werden.

Aus Fig. 6 geht hervor, welcher Kurvenbahn die Rollenkette 1 folgen muss, wenn sie einen Antrieb mit nicht zueinander fluchtenden Zahnrädern 20 und 21 bildet. In diesem Falle werden die Kettenglieder 2 und 3 parallelogrammförmig verwunden, was durch das eingebaute Spiel 15 zwischen den Außenlaschen 8 und den Bolzen 4 oder 5 ermöglicht wird. Eine Beweglichkeit zwischen den Bolzen 4,5 und den Außenlaschen 8 ist auch dann möglich, wenn das Spiel 15 gegen 0 geht.

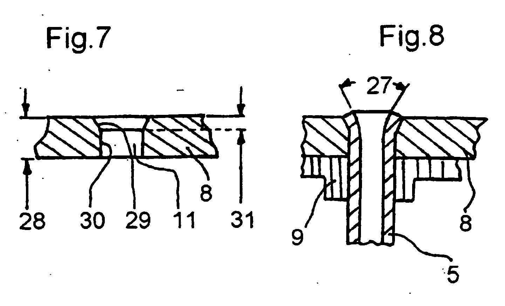

Aus Fig.7 geht hervor, dass die Bohrung 11 der Außenlasche 8 nicht eine Kontur 14, sondern einen zylindrischen Abschnitt 30 und einen kegeligen Abschnitt 29 auf einer Erstreckung 31 aufweist, wobei die Erstrekkung 31 ein Drittel einer Dicke 28 der Außenlasche 8 ausmacht. Der kegelige Abschnitt weist vorzugsweise einen Öffnungswinkel von 40° bis 60° auf, um dort eine wirksame Verbindung des Endes 6,7 des Bolzens 4,5 her zu stellen.

Laut Fig.8 ist der Bolzen 5 in der Außenlasche 8 im eingepressten und vernieteten Zustand dargestellt, wobei durch das Einpressen ein Konuswinkel 27 angeprägt ist, dessen Größe 55° bis 65° sein muss, da es nur so zu einem kraftschlüssigen Kontakt mit dem kegeligen Abschnitt in der Außenlasche 8 kommt. Die Stirnflächen des Bolzens 5 haben sich zu balligen Schrägen verändert, die die Schaltqualität solange nicht verändern, wie an der Außenkontur der Rollenkette 1 keine Kante entstanden ist.

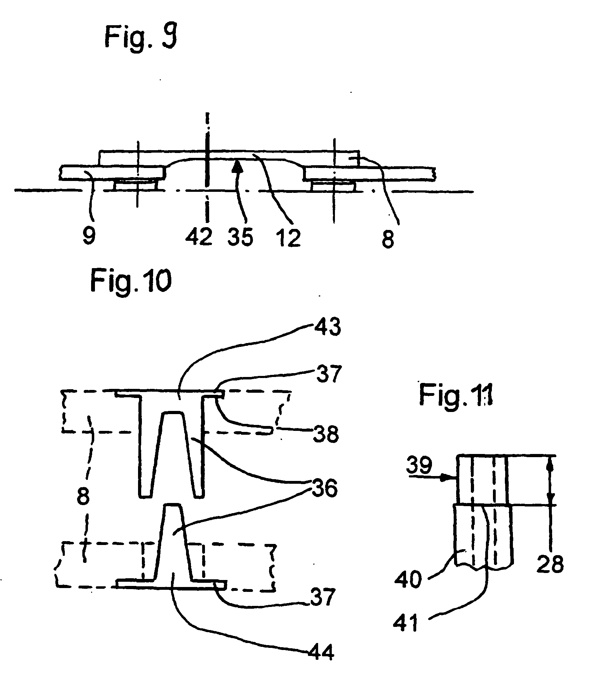

Aus Fig. 9 ist ersichtlich, dass eine Außenlasche 8 quer über den Bereich ihres schlanken Mittelteils 12 eine reduzierte Dicke 35 aufweist, um die Funktion der schmalen Rollenkette 1 beim Schaltvorgang zu erhalten oder zu verbessern. Ebenfalls zur Verbesserung der Funktion trägt es bei, wenn die reduzierte Dicke 35 über den gesamten Bereich zwischen den Innenlaschen 9 und auch entlang einer Schnittfläche 42 quer zur Längsrichtung der Rollenkette 1 verläuft.

Aus Fig. 10 geht ein Verschlussglied 36 hervor, das aus einem ersten Element 43 und einem zweiten Element 44 besteht und so gestaltet ist, dass diese ineinander verpresst werden können und dann den Bauraum eines Bolzens 4,5 einnehmen. Es hat sich als vorteilhaft erwiesen, an beide Elemente 43,44 je einen Flachkopf 37 an zu formen, der sich in eine Ansenkung 38 der Außenlasche 8 einfügt, ohne eine Kante außerhalb der Außenkontur der Rollenkette 1 zu bilden.

Als Montagehilfe für eine Rollenkette 1 wird mit der Fig.11 ein Bolzen 40 vorgestellt, der gemessen von seinen Stirnflächen im Abstand von der Dicke 28 der Außenlasche 8 beidseitig einen Anschlag 41 aufweist, der einen außen liegenden reduzierten Durchmesser 39 vom eigentlichen normalen Durchmesser der herkömmlichen Bolzen 4,5,23 trennt. Beim Aufschieben der Au-ßenlaschen im Montageautomaten erreicht die Außenlasche 8 ihre vorbestimmte Position, wenn sie gegen den Anschlag 41 trifft, wodurch ein Messvorgang entfallen und der Reckvorgang erleichtert werden kann.

### Bezugszeichenliste

- 1.: Rollenkette
- 2.: äußeres Kettenglied
- 3.: inneres Kettenglied
- 4.: Bolzen aus Rundmaterial
- 5.: Bolzen aus Rohrmaterial
- 6.: Ende des Bolzens aus Rundmaterial
- 7.: Ende des Bolzens aus Rohrmaterial
- 8.: Außenlasche
- 9.: Innenlasche
- 10.: kreisrundes Ende
- 11.: Bohrung
- 12.: Schlankes Mittelteil
- 13.: Rolle
- 14.: Kontur
- 15.: Spiel
- 16.: Prägewerkzeug
- 17.: Stempel
- 18.: Aufweitungskegel
- 19.: Verschlussglied
- 20.: Kalibrierungsfläche
- 21.: Zahnrad
- 22.: Zahnrad
- 27.: Konuswinkel
- 28.: Dicke
- 29.: Kegeliger Abschnitt
- 30.: Zylindrischer Abschnitt
- 31.: Erstreckung
- 35.: Reduzierte Dicke
- 36.: Verschlussglied
- 37.: Flachkopf
- 38.: Ansenkung
- 39.: reduzierter Durchmesser
- 40.: Bolzen
- 41.: Anschlag
- 42.: Schnittfläche
- 43.: Erstes Element
- 44.: Zweites Element

## Patentansprüche

1. Fertigungsverfahren für eine Rollenkette (1) für Fahrräder,
wobei die Rollenkette (1) gebildet wird durch äußere Kettenglieder (2), die Außenlaschen (8) aufweisen, und durch innere Kettenglieder (3), die Innenlaschen (9) aufweisen, wobei die Kettenglieder durch Rohrbolzen(5, 23) verbunden sind, wobei die Außenlaschen(8) und die Innenlaschen (9) je zwei breitere Enden mit je einer Bohrung (11) für deren Verbindung durch die Rohrbolzen (5, 23) aufweisen und die breiteren Enden jeweils durch einen schlankeren Mittelteil verbunden sind, wobei um die Bolzen (5, 23) Rollen (13) angeordnet sind, damit sie mit Zahnlücken einer Verzahnung in Vielfach-Kettenradanordnungen an Fahrrädern zusammenwirken wobei die Länge der Bohrung (11) im äußeren Kettenglied (2) die Materialdicke der Außenlasche nicht übersteigt, wobei die Mantellinien der Bohrungen (11) der äußeren Kettenglieder (2) eine sich nach außen öffnende trichterförmige Kontur (14) zur Aufnahme eines plastisch umgeformten Endes (7) des Bolzens (4, 5) aufweisen und wobei der Rohrbolzen (5, 23) nach seiner Montage in der Außenlasche (8) an seinen Enden (7) jeweils einen konisch aufgeweiteten Rohrabschnitt mit einem zum Ende (7) zu sich vergrößernden Innendurchmesser aufweist,
**dadurch gekennzeichnet, dass** die Rohrbolzen (5, 23) einen zusammenhängenden Kreisringquerschnitt aufweisen
und dass zur Montage der Rohrbolzen (5) zwei gegenüberliegende Stempel (17) eines Prägewerkzeuges (16) zusammenfahren und dabei außenseitig in die Bohrungen (11) einander gegenüberliegender Außenlaschen (8) einfahren, wobei jeder Stempel (17) einen Aufweitekegel (18) aufweist, der am jeweiligen Ende (7) des Bolzens die Bohrung (11) aufweitet und einen Formschluss herstellt zwischen dem jeweiligen Ende (7) und der Kontur (14) an der Außenlasche.

2. Verfahren nach Anspruch 1,
**dadurch gekennzeichnet,**
**dass** das Prägewerkzeug (16) aus zwei Stempeln (17) besteht, die zur Aufweitung der Enden (7) des Bolzens (5) aus Rohrmaterial je einen Aufweitungskegel (18) und zur Bestimmung der Länge dieses Bolzens (5) und/oder zur Angleichung der Enden (7) an das Profil der Kontur (14) der Bohrung (11) der Außenlaschen (8) je eine Kalibrierungsfläche (20) aufweisen.

3. Verfahren nach Anspruch 1,
**dadurch gekennzeichnet,**
**dass** die Außenlaschen (8) mit den Bolzen (4,5) durch die Gestaltung der Kontur (14) der Bohrung (11) sowie durch die Art der Umformung der Enden (6,7) des Bolzens (5) eine Verbindung eingehen können, die eine geringfügige Bewegung des Bolzens (5) in seinem Sitz in der Bohrung (11) der Außenlasche (8) erlaubt.

4. Verfahren nach Anspruch 3,
**dadurch gekennzeichnet,**
**dass** die geringfügigen Bewegungen zu einer Verschiebung des Rechtecks, gebildet aus zwei Bolzen (5) und zwei Außenlaschen (8), hin zu einem Parallelogramm führen.

5. Verfahren nach Anspruch 3 oder 4,
**dadurch gekennzeichnet,**
**dass** die geringfügigen Bewegungen durch ein Spiel (15) entstehen, das speziell am größten Durchmesser der trichterförmigen Bohrung (11) angeordnet ist.

6. Verfahren nach Anspruch 5,
**dadurch gekennzeichnet,**
**dass** das Spiel (15) 0 sein kann, während die übrigen Partien zwischen der Bohrung (11) und dem Ende (7) des Bolzens (4,5) einen Presssitz aufweisen.

7. Verfahren nach Anspruch 1,
**dadurch gekennzeichnet,**
**dass** die Montage der Rollenkette (1) zu einer betriebsfähigen Einheit mit einem Verschlussglied (19) erfolgt, welches zwei innere Kettenglieder (3) verbindet sowie ohne plastische Verformung oder Einpresskräfte am Verschlussglied (19) montierbar und demontierbar ist und dadurch die gleiche Sicherheit gegen Aufsprengen der Verbindung der Bolzen (5) mit den Außenlaschen (8) bei Querkräften bietet.

8. Verfahren nach Anspruch 1,
**dadurch gekennzeichnet,**
**dass** die Bohrung (11) der Außenlasche (8) einen kegeligen Abschnitt (29) und einen zylindrischen Abschnitt (30) aufweist.

9. Verfahren nach Anspruch 8,
**dadurch gekennzeichnet,**
**dass** der kegelige Abschnitt (29) auf einer Erstrekkung (31) angeordnet ist, die ein Drittel einer Dicke (28) der Außenlasche (8) ausmacht.

10. Verfahren nach Anspruch 1,
**dadurch gekennzeichnet,**
**dass** der Aufweitungskegel (18) das Ende (7) des Bolzens (23,40) derart aufweitet, dass ein Konuswinkel (27) von 550° bis 65° entsteht.

11. Verfahren nach Anspruch 1,
**dadurch gekennzeichnet,**
**dass** ein Rohrbolzen (23) in seinem mittleren Bereich einen Abschnitt mit Vollquerschnitt aufweist, wobei die Länge (26) des Hohlquerschnittes an den beiden rohrförmigen Enden (25) mindestens der Länge des kegeligen Abschnittes (31) in den Bohrungen (11) der Außenlaschen (8) entspricht.

12. Verfahren nach Anspruch 1,
**dadurch gekennzeichnet,**
**dass** der Stempel (17) des Prägewerkzeugs (16) einen Aufweitungskegel (18) aufweist, der kleiner ist, als der zur Erzeugung des Konuswinkels (27) im Innern der Enden (7) erforderliche, wobei dem Stempel (17) aber bei der Umformung der Enden (7) der Bolzen (5,23,40) zur Erzeugung des Konuswinkels (27) eine zusätzliche Taumelbewegung überlagert wird.

13. Verfahren nach Anspruch 1,
**dadurch gekennzeichnet,**
**dass** die Außenlasche (8) im Bereich ihres schlanken Mittelteils (12) eine reduzierte Dicke (35) aufweist, wobei die Außenlasche (8) auf ihrer zur Innenlasche (9) weisenden Seite mindestens an einer Schnittfläche (42) senkrecht zur Kettenlängsrichtung zurück genommen ist.

14. Verfahren nach Anspruch 1,
**dadurch gekennzeichnet,**
**dass** die Enden (7) eines Bolzens (40) einen Anschlag (41) aufweisen, der von der Stirnfläche des Bolzens (40) einen Abstand von etwa der Dicke (28) der Außenlasche (8) aufweist, wobei der Bereich des Bolzens (40) in der Außenlasche (8) sowie deren Bohrung (11) einen reduzierten Durchmesser (39) gegenüber dem normalen Durchmesser der Bolzen (5, 23) und der Bohrung (11) der Innenlasche (9) aufweist.

15. Verfahren nach einem der Ansprüche 1 bis 14,
**dadurch gekennzeichnet,**
**dass** der Bolzen (5,23,40) im eingepressten Zustand bündig mit der äußeren Fläche der Außenlasche (8) abschließt, oder zumindest keine Kante aufweist, wenn er durch die plastische Verformung seines Endes (7) eine ballige Kontur aufweist.

16. Verfahren nach Anspruch 7,
**dadurch gekennzeichnet,**
**dass** die Montage der Rollenkette (1) zu einer betriebsfähigen Einheit mit einem Verschlussglied (36) erfolgt, welches aus einem ersten Element (43) und einem zweiten Element (44) besteht, die ineinander verpresst den Raum eines Bolzens (5) einnehmen und so ein inneres Kettenglied (3) mit einem äußeren Kettenglied (2) verbinden.

17. Verfahren nach Anspruch 16,
**dadurch gekennzeichnet,**
**dass** mindestens eines der Elemente (43,44) einen Flachkopf (37) aufweist, der sich in eine dazu passende Ansenkung (38) in der Außenlasche (8) einfügt.

## Claims

1. Method for manufacturing a roller chain (1) for bicycles,
the roller chain (1) being formed by outer chain links (2), which have outer link plates (8), and by inner chain links (3), which have inner link plates (9), the chain links being joined by tubular pins (5, 23), the outer link plates (8) and the inner link plates (9) each having two broader ends, each having a hole (11) for their connection by the tubular pins (5, 23), and the broader ends each being joined by a narrower middle part, rollers (13) being arranged around the pins (5, 23), so that they interact with tooth gaps of a tooth system in multiple sprocket arrangements on bicycles, the length of the hole (11) in the outer chain link (2) not exceeding the thickness of the material of the outer link plate, the generating lines of the holes (11) in the outer chain links (2) having an outward-opening funnel-shaped contour (14) for receiving a plastically deformed end (7) of the pin (4, 5), and the tubular pin (5, 23), after it has been mounted in the outer link plate (8), having, at each of its ends (7), a conically widened tube section with an internal diameter which increases towards the end (7), **characterized in that** the tubular pins (5, 23) have a cross section in the form of a continuous circular ring, and **in that**, to fit the tubular pins (5), two opposite rams (17) of a stamping tool (16) move together and in the process move on the outer side into the holes (11) in opposite outer link plates (8), each ram (17) having a widening cone (18) which widens the hole (11) at the respective end (7) of the pin and produces a positive lock between the respective end (7) and the contour (14) at the outer link plate.

2. Method according to Claim 1, **characterized in that** the stamping tool (16) comprises two punches (17), which each have an expansion cone (18) for expanding the ends (7) of the pin (5) of tube stock, and each have a calibration surface (20) for determining the length of the said pin (5) and/or for making the ends (7) conform to the profile of the contour (14) of the hole (11) in the outer link plates (8).

3. Method according to Claim 1, **characterized in that** the design of the contour (14) of the hole (11) and the nature of the deformation of the ends (6, 7) of the pin (5) enable the outer link plates (8) to enter into a connection with the pins (4, 5) which permits a slight movement of the pin (5) in its seat in the hole (11) in the outer link plate (8).

4. Method according to Claim 3, **characterized in that** the slight movements lead to a displacement of the rectangle, formed from two pins (5) and two outer link plates (8), to form a parallelogram.

5. Method according to Claim 3 or 4, **characterized in that** the slight movements occur due to a clearance (15), which is arranged in particular at the greatest diameter of the funnel-shaped hole (11).

6. Method according to Claim 5, **characterized in that** the clearance (15) may be 0, whilst the other sections between the hole (11) and the end (7) of the pin (4, 5) have a press fit.

7. Method according to Claim 1, **characterized in that** the assembly of the roller chain (1) into a working unit is achieved by means of a closing link (19), which joins two inner chain links (3) and can be assembled and dismantled without plastic deformation or press fitting forces on the closing link (19) and thereby affords the same security against parting of the connection between the pins (5) and the outer link plates (8) under lateral forces.

8. Method according to Claim 1, **characterized in that** the hole (11) in the outer link plate (8) has a tapered section (29) and a cylindrical section (30).

9. Method according to Claim 8, **characterized in that** the tapered section (29) is arranged over a length (31) which is equal to one third of a thickness (28) of the outer link plate (8).

10. Method according to Claim 1, **characterized in that** the expansion cone (18) expands the end (7) of the pin (23, 40) in such a way that a taper angle (27) of 55° to 65° is produced.

11. Method according to Claim 1, **characterized in that** a tubular pin (23) has a section presenting a solid cross section in its middle area, the length (26) of the hollow cross section at both tubular ends (25) being at least equal to the length of the tapered section (31) in the holes (11) in the outer link plates (8).

12. Method according to Claim 1, **characterized in that** the punch (17) of the stamping tool (16) has an expansion cone (18), which is smaller than that required to produce the taper angle (27) inside the ends (7), but an additional wobbling motion being superimposed on the punch (17) when deforming the ends (7) of the pins (5, 23, 40), in order to produce the taper angle (27).

13. Method according to Claim 1, **characterized in that** the outer link plate (8) has a reduced thickness (35) in the area of its narrow middle part (12), the outer link plate (8), on its side facing the inner link plate (9), being drawn back on at least one plane of section (42) perpendicular to the chain longitudinal direction.

14. Method according to Claim 1, **characterized in that** the ends (7) of a pin (40) have a stop (41) at a distance from the end face of the pin (40) approximating to the thickness (28) of the outer link plate (8), the area of the pin (40) in the outer link plate (8) and its hole (11) having a reduced diameter (39) compared to the normal diameter of the pins (5, 23) and of the hole (11) in the inner link plate (9).

15. Method according to one of Claims 1 to 14, **characterized in that**, when pressed in, the pin (5, 23, 40) finishes flush with the outer surface of the outer link plate (8), or at least does not have any edge, when it presents a spherical contour due to the plastic deformation of its end (7).

16. Method according to Claim 7, **characterized in that** the assembly of the roller chain (1) into a working unit is achieved by means of a closing link (36), which comprises a first element (43) and a second element (44), which, when pressed into one another, occupy the space of a pin (5) and so join an inner chain link (3) to an outer chain link (2).

17. Method according to Claim 16, **characterized in that** at least one of the elements (43, 44) has a flat head (37), which is inserted into a countersink (38) in the outer link plate (8) corresponding thereto.

## Revendications

1. Procédé de fabrication d'une chaîne à rouleaux (1) pour bicyclettes,
sachant que la chaîne à rouleaux (1) est formée par des maillons extérieurs (2) qui présentent des plaques extérieures (8) et par des maillons intérieurs (3) qui présentent des plaques intérieures (9), sachant que les maillons sont assemblés par des axes tubulaires (5, 23), sachant que les plaques extérieures (8) et les plaques intérieures (9) présentent chacune deux extrémités plus larges dotées chacune d'un perçage (11) pour leur assemblage par les axes tubulaires (5, 23), et que les extrémités plus larges sont respectivement reliées par une partie centrale plus mince, sachant que des rouleaux (13) sont disposés autour des axes tubulaires (5, 23) afin de coopérer avec des entredents d'une denture dans des ensembles de roues à chaîne multiples sur des bicyclettes,
sachant que la longueur du perçage (11) dans le maillon extérieur (2) ne dépasse pas l'épaisseur de matériau de la plaque extérieure, sachant que les génératrices des perçages (11) des maillons extérieurs (2) présentent un contour (14) en entonnoir s'ouvrant vers l'extérieur afin de recevoir une extrémité plastiquement déformée (7) de l'axe (4, 5), et sachant que l'axe tubulaire (5, 23), à la suite de son montage dans la plaque extérieure (8), présente à chacune de ses extrémités (7) une partie tubulaire coniquement élargie ayant un diamètre extérieur augmentant en direction de l'extrémité (7),
**caractérisé en ce que** les axes tubulaires (5, 23) présentent une section en forme de couronne continue, et **en ce que**, pour le montage des axes tubulaires (5), deux poinçons opposés (17) d'un outil de repoussage (16) se rapprochent l'un de l'autre et pénètrent alors de l'extérieur dans les perçages (11) de plaques extérieures (8) mutuellement opposées, sachant que chaque poinçon (17) présente un cône d'élargissement (18) qui élargit le perçage (11) à l'extrémité respective (7) de l'axe et réalise une liaison positive entre l'extrémité respective (7) et le contour (14) sur la plaque extérieure.

2. Procédé selon la revendication 1, **caractérisé en ce que** l'outil de repoussage (16) est constitué de deux poinçons (17) qui, afin d'élargir les extrémités (7) de l'axe (5) en matériau tubulaire, présentent chacun un cône d'élargissement (18) et qui, afin de déterminer la longueur de cet axe (5) et/ou afin d'adapter les extrémités (7) au profil du contour (14) du perçage (11) des plaques extérieures (8), présentent chacun une surface de calibrage (20).

3. Procédé selon la revendication 1, **caractérisé en ce que** les plaques extérieures (8) peuvent, par la forme donnée au contour (14) du perçage (11) ainsi que par le type de déformation des extrémités (6, 7) de l'axe (5), entrer en un assemblage avec les axes (4, 5) qui autorise un léger mouvement de l'axe (5) dans son siège dans le perçage (11) de la plaque extérieure (8).

4. Procédé selon la revendication 3, **caractérisé en ce que** les légers mouvements engendrent une modification en un parallélogramme du rectangle formé de deux axes (5) et de deux plaques extérieures (8).

5. Procédé selon la revendication 3 ou 4, **caractérisé en ce que** les légers mouvements sont produits par un jeu (15) qui est spécifiquement présent sur le plus grand diamètre du perçage en entonnoir (11).

6. Procédé selon la revendication 5, **caractérisé en ce que** le jeu (15) peut être nul, tandis que les autres parties entre le perçage (11) et l'extrémité (7) de l'axe (4, 5) présentent un ajustement serré.

7. Procédé selon la revendication 1, **caractérisé en ce que** le montage de la chaîne à rouleaux (1) en une unité fonctionnelle s'effectue avec un maillon de fermeture (19) qui assemble deux maillons intérieurs (3) et qui peut être monté et démonté sans déformation plastique ni forces d'emmanchement sur le maillon de fermeture (19), et offre ainsi la même sécurité à l'encontre de la rupture de l'assemblage des axes (5) avec les plaques extérieures (8) en présence de forces transversales.

8. Procédé selon la revendication 1, **caractérisé en ce que** le perçage (11) de la plaque extérieure (8) présente une partie conique (29) et une partie cylindrique (30).

9. Procédé selon la revendication 8, **caractérisé en ce que** la partie conique (29) est disposée sur une étendue (31) qui constitue un tiers de l'épaisseur (28) de la plaque extérieure (8).

10. Procédé selon la revendication 1, **caractérisé en ce que** le cône d'élargissement (18) élargit l'extrémité (7) de l'axe (23, 40) de telle sorte qu'on obtient un angle de cône (27) de 55° à 65°.

11. Procédé selon la revendication 1, **caractérisé en ce qu'**un axe tubulaire (23) présente dans sa région centrale une partie à section pleine, sachant que la longueur (26) de la section creuse aux deux extrémités tubulaires (25) correspond au moins à la longueur de la partie conique (31) des perçages (11) des plaques extérieures (8).

12. Procédé selon la revendication 1, **caractérisé en ce que** le poinçon (17) de l'outil de repoussage (16) présente un cône d'élargissement (18) qui est inférieur à ce qui est nécessaire pour produire l'angle de cône (27) à l'intérieur des extrémités (7), sachant toutefois qu'un mouvement supplémentaire de nutation est imposé au poinçon (17) lors de la déformation des extrémités (7) des axes (5, 23, 40) pour produire l'angle de cône (27).

13. Procédé selon la revendication 1, **caractérisé en ce que** la plaque extérieure (8) présente une épaisseur réduite (35) dans la région de sa partie centrale mince (12), sachant que la plaque extérieure (8), sur son côté tourné vers la plaque intérieure (9), est en retrait perpendiculairement à la direction longitudinale de la chaîne au moins sur une surface de coupe (42).

14. Procédé selon la revendication 1, **caractérisé en ce que** les extrémités (7) d'un axe (40) présentent une butée (41) qui présente une distance de la surface frontale de l'axe (40) correspondant environ à l'épaisseur (28) de la plaque extérieure (8), sachant que la région de l'axe (40) située dans la plaque extérieure (8) ainsi que son perçage (11) présente un diamètre réduit (39) par rapport au diamètre normal de l'axe (5, 23) et du perçage (11) de la plaque intérieure (9).

15. Procédé selon l'une quelconque des revendications 1 à 14, **caractérisé en ce que** l'axe (5, 23, 40), dans l'état emmanché, se termine à fleur de la surface extérieure de la plaque extérieure (8), ou au moins ne présente pas d'arête vive, s'il présente un contour bombé du fait de la déformation plastique de son extrémité (7).

16. Procédé selon la revendication 7, **caractérisé en ce que** le montage de la chaîne à rouleaux (1) en une unité fonctionnelle s'effectue avec un maillon de fermeture (36) qui est constitué d'un premier élément (43) et d'un deuxième élément (44) qui, en étant mutuellement assemblés par pression, prennent la place d'un axe (5) et assemblent ainsi un maillon intérieur (3) à un maillon extérieur (2).

17. Procédé selon la revendication 16, **caractérisé en ce qu'**au moins un des éléments (43, 44) présente une tête plate (37) qui s'insère dans un chanfreinage adapté (38) dans la plaque extérieure (8).
